Europäisches Patentamt

European Patent Office

Office européen des brevets

(19)

(11) Numéro de publication: **0 346 551 B1**

## (12) FASCICULE DE BREVET EUROPEEN

(45) Date de publication de fascicule du brevet: **23.09.92**  (51) Int. Cl.⁵: **B64F  1/26**

(21) Numéro de dépôt: **88403295.4**

(22) Date de dépôt: **22.12.88**

(54) **Dispositif pour capter le jet de gaz d'échappement d'un réacteur.**

(30) Priorité: **17.06.88 FR 8808164**

(43) Date de publication de la demande:
**20.12.89 Bulletin  89/51**

(45) Mention de la délivrance du brevet:
**23.09.92 Bulletin  92/39**

(84) Etats contractants désignés:
**AT BE CH DE ES GB GR IT LI LU NL SE**

(56) Documents cités:
**FR-A- 1 187 245**
**FR-A- 1 376 571**
**US-A- 3 289 943**
**US-A- 3 378 204**
**US-A- 3 715 009**

(73) Titulaire: **S.A: André Boet Société Anonyme dite:**
**26 rue Paul Doumer**
**F-59650 Villeneuve d'Ascq(FR)**

(72) Inventeur: **Boet, Jean-Paul**
**26, Rue Paul Doumer**
**F-59650 Villeneuve d'Ascq(FR)**

(74) Mandataire: **Bonnetat, Christian et al**
**CABINET BONNETAT 23, Rue de Léningrad**
**F-75008 Paris(FR)**

# Description

La présente invention concerne un dispositif pour capter le jet de gaz d'échappement d'un réacteur d'aéronef à tuyère orientable ou à jet de gaz orientable par rapport à l'axe longitudinal dudit réacteur, lors d'essais au sol de ce dernier, ainsi qu'une installation d'essais pour réacteur d'aéronef, équipée dudit dispositif.

De telles installations comportent essentiellement un silencieux, se présentant généralement sous forme d'un corps cylindrique allongé, disposé à l'arrière du réacteur qui doit subir des essais au sol, silencieux qui collecte les gaz d'échappement du réacteur, permet de les refroidir et de les rejeter à l'atmosphère après atténuation du bruit d'échappement. Le silencieux connu de ce type est tout à fait approprié pour des réacteurs classiques qui éjectent les gaz d'échappement suivant l'axe longitudinal du réacteur. On sait également disposer entre le réacteur et le silencieux, notamment par le brevet US-A-3 715 009, un dispositif comprenant une chemise externe de forme générale cylindrique, évasée au voisinage de son extrémité destinée à se trouver en regard du réacteur testé, et une chemise interne de forme générale cylindrique, concentrique à ladite chemise externe. Dans ce cas, la chemise interne a pour rôle d'attirer l'air environnant par effet de trompe du jet de gaz d'échappement.

Toutefois, une nouvelle génération de réacteurs est actuellement développée par les constructeurs, réacteurs à tuyère orientable par rapport à l'axe longitudinal de ces derniers. Lorsque le jet de gaz du réacteur ou lorsque la tuyère du réacteur en cours de test présente une certaine inclinaison par rapport audit axe longitudinal (fonctionnement dit "en vecteur"), la partie d'extrémité du silencieux la plus proche du réacteur se trouve exposée, tout au moins la portion de celle-ci qui est frappée par le jet de gaz d'échappement, à des températures très élevées, de l'ordre de 2000°C, températures auxquelles ne résistent pas la plupart des métaux et alliages métalliques classiques.

La présente invention a pour but de résoudre ce problème, et concerne un dispositif permettant de capter, de refroidir et de redresser le jet de gaz d'échappement d'un réacteur d'aéronef à tuyère orientable, avant qu'il n'atteigne le silencieux proprement dit.

A cet effet, le dispositif pour capter le jet de gaz d'échappement d'un réacteur d'aéronef à tuyère orientable par rapport à l'axe longutidinal dudit réacteur, lors d'essais au sol de ce dernier, et adapté pour coopérer avec un silencieux, présentant un corps de forme générale cylindrique allongé, ledit dispositif comprenant une chemise externe de forme générale cylindrique, évasée au voisinage de son extrémité destinée à se trouver en regard du réacteur testé, et une chemise interne de forme générale cylindrique, concentrique à ladite chemise externe, et étant disposé entre le réacteur et le silencieux, est remarquable, selon l'invention, en ce que ladite chemise interne comporte au moins un premier serpentin, pour la circulation d'un fluide de refroidissement dans ladite chemise interne, et est destinée à redresser le jet de gaz d'échappement lorsque ce dernier ou la tuyère du réacteur testé présente une certaine inclinaison par rapport à l'axe longitudinal dudit réacteur.

Ainsi, lorsque le jet de gaz d'échappement du réacteur atteint le silencieux proprement dit, disposé en aval dudit dispositif par rapport au sens d'écoulement dudit jet, ce dernier est de nouveau au moins sensiblement parallèle à l'axe longitudinal du silencieux, et ne risque pas de frapper les parois de celui-ci.

Avantageusement, ledit premier serpentin s'étend généralement suivant les génératrices du cylindre formé par ladite chemise interne.

Par ailleurs, au voisinage de son extrémité aval par rapport au sens d'écoulement du jet de gaz d'échappement, ladite chemise interne peut comporter au moins un second serpentin formant des spires autour de l'axe longitudinal de ladite chemise interne.

Avantageusement, la partie d'extrémité aval de la chemise interne est rétrécie, ce qui participe au redressement du jet de gaz d'échappement.

Selon une autre caractéristique de l'invention, ledit premier serpentin est décomposé en une pluralité de sections longitudinales indépendantes. Cela permet de tenir compte du fait que le jet de gaz d'échappement chauds ne frappe, à un moment donné de l'essai du réacteur, qu'un secteur angulaire particulier de la chemise interne.

De préférence, lesdites sections longitudinales indépendantes sont alimentées à partir d'une source de fluide de refroidissement commune.

En outre, on peut prévoir des moyens de réglage du débit de fluide dans chacune desdites sections.

Selon encore une autre caractéristique de l'invention, la partie d'extrémité évasée de ladite chemise externe est adaptée pour y permettre la circulation d'un fluide de refroidissement. Cela est particulièrement intéressant lorsque le réacteur testé fonctionne en inversion de poussée.

Par ailleurs, lesdites chemises externe et interne peuvent être réalisées en métal, notamment en acier, et le fluide de refroidissement peut être de l'eau.

La présente invention concerne également une installation d'essais au sol pour réacteur d'aéronef, comportant un silencieux, présentant un corps de forme générale cylindrique allongé, destiné à être disposé à l'arrière du réacteur testé, remarquable en ce que, entre le réacteur et le silencieux, est prévu un dispositif tel que défini ci-dessus.

Dans ladite installation, en particulier, le silencieux peut être mobile par rapport audit dispositif.

Dans le cas où, à son extrémité amont par rapport au sens d'écoulement du jet de gaz d'échappement du réacteur, le silencieux présente une cheminée d'aspiration d'air, il est avantageux que, en service, la partie aval dudit dispositif soit disposée sous ladite cheminée.

Les figures du dessin annexé feront bien comprendre comment l'invention peut être réalisée. Sur ces figures, des références identiques désignent des éléments semblables.

La figure 1 est une vue schématique avec arrachement d'une installation d'essais au sol pour réacteur d'aéronef.

La figure 2 est une vue schématique en coupe longitudinale du dispositif capteur de jet selon l'invention.

La figure 3 est une vue schématique partielle en perspective d'un premier serpentin de la chemise interne du dispositif de l'invention.

La figure 4 est une vue schématique partielle agrandie de la partie aval de la chemise interne.

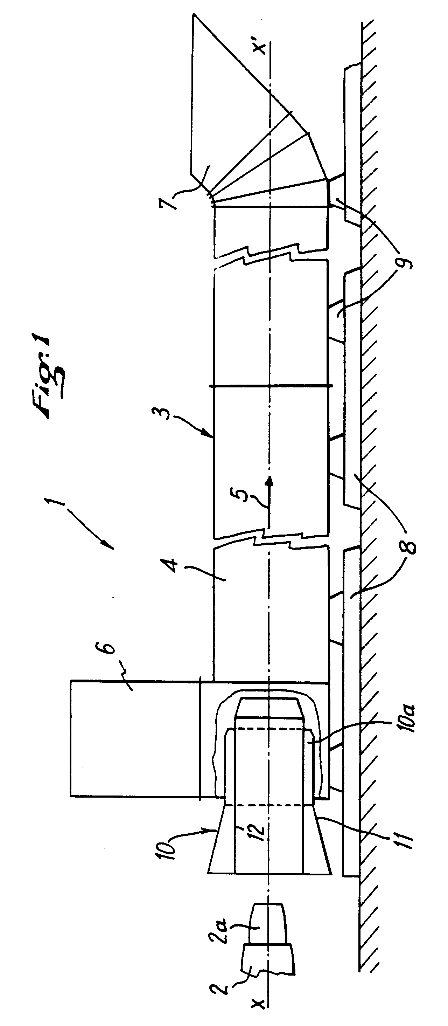

En se référant à la figure 1, l'installation 1 d'essais au sol pour réacteur 2 d'aéronef comporte un silencieux 3, présentant un corps tubulaire allongé 4 de forme générale cylindrique, disposé à l'arrière du réacteur 2 testé. A son extrémité amont par rapport au sens d'écoulement (flèche 5) du jet de gaz d'échappement du réacteur 2, le silencieux 3 présente, dans cet exemple de réalisation, une cheminée d'aspiration d'air 6. A son extrémité aval, le silencieux 3 se termine par une partie 7 coudée vers le haut, par où sont rejetés, à l'atmosphère, les gaz d'échappement refroidis. Par ailleurs, le silencieux 3 est, dans ce cas, monté mobile sur des rails 8 par l'intermédiaire de chariots 9.

De plus, entre le réacteur 2 et le silencieux 3, est prévu un dispositif 10 pour capter le jet de gaz d'échappement du réacteur 2, dont la tuyère 2a est orientable par rapport à l'axe longitudinal X,X' dudit réacteur. En service, la partie aval 10a du dispositif 10 est disposée, comme on peut le voir sur la figure 1, sous la cheminée 6.

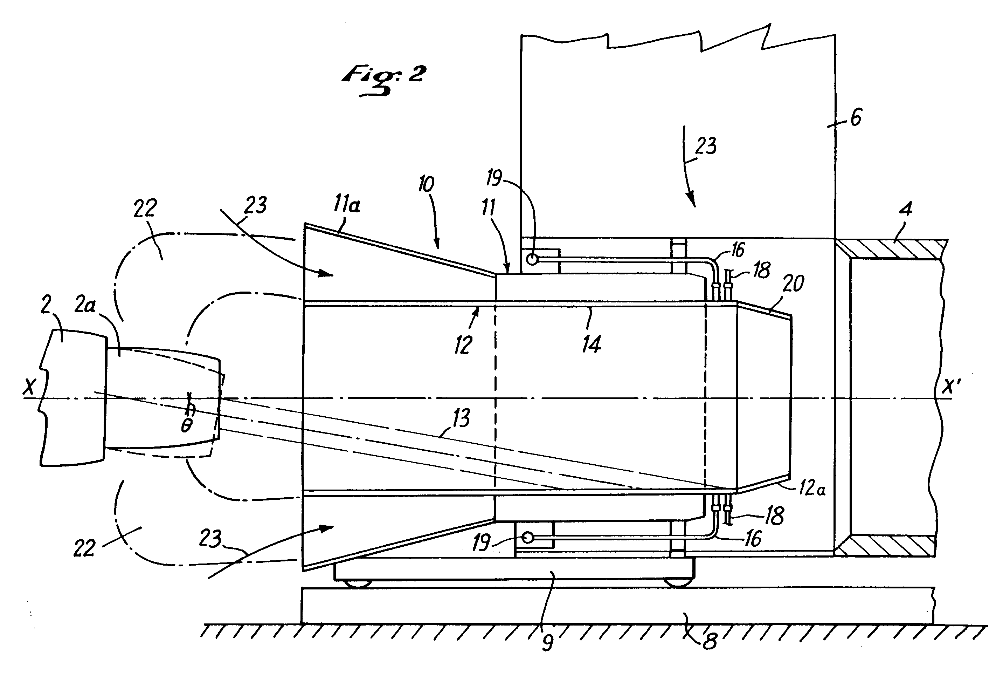

En se référant maintenant plus particulièrement à la figure 2, le dispositif 10 comprend une chemise externe 11 de forme générale cylindrique, évasée au voisinage de son extrémité 11a se trouvant en regard du réacteur 2 testé, et une chemise interne 12 de forme générale cylindrique, concentrique à la chemise externe 11 (en service, l'axe longitudinal des chemises externe 11 et interne 12 est avantageusement confondu avec l'axe longitudinal X,X' du réacteur 2) et destinée à redresser le jet de gaz d'échappement 13 lorsque ce dernier ou la tuyère 2a du réacteur 2 testé présente une certaine inclinaison par rapport à l'axe longitudinal X,X' du réacteur 2.

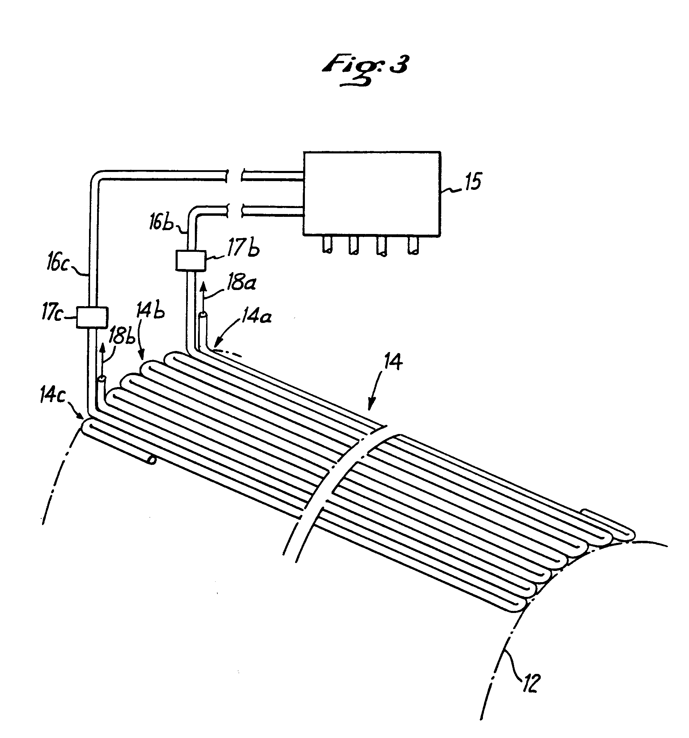

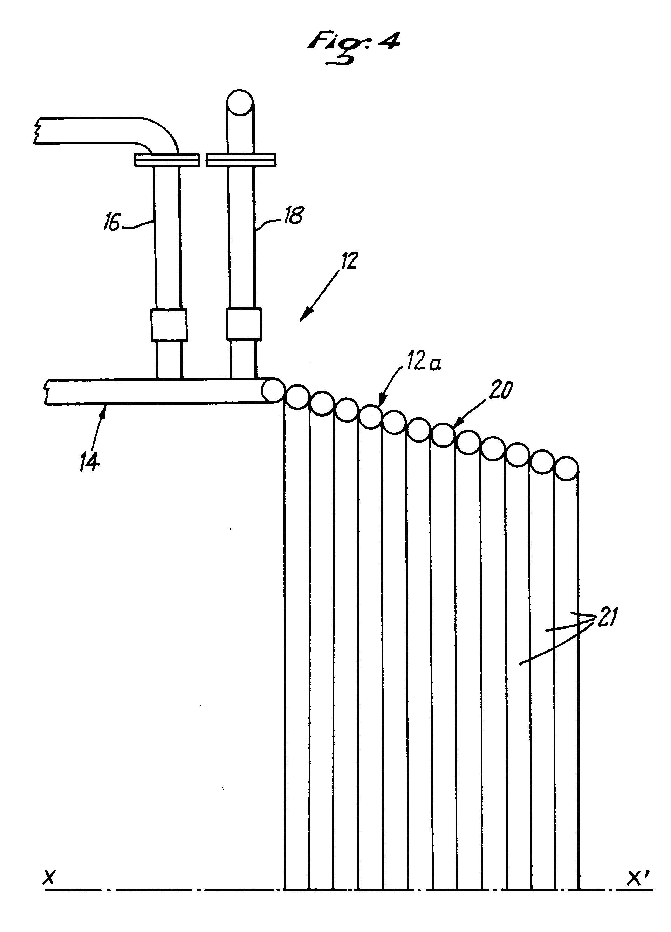

Plus particulièrement, la chemise interne 12 est adaptée pour y permettre la circulation d'un fluide de refroidissement, comme de l'eau. Une telle chemise interne pourrait, par exemple, être réalisée sous forme d'une double enveloppe. Cependant, il est avantageux que, comme montré sur les figures 3 et 4, la chemise interne 12 soit constituée de serpentins, dans lesquels peut circuler l'eau de refroidissement.

Plus particulièrement, en se référant à la figure 3, la chemise interne 12 comporte un premier serpentin 14, s'étendant généralement suivant les génératrices du cylindre formé par la chemise interne 12. Ce serpentin 14 est décomposé en une pluralité de sections longitudinales indépendantes 14a,14b,14c, etc..., alimentée à partir d'une source d'eau de refroidissement commune 15. Par ailleurs, la tuyauterie d'arrivée d'eau 16b, 16c de chaque section est munie de moyens 17b,17c de réglage du débit d'eau dans chaque section individuelle. Comme déjà indiqué, cette décomposition du serpentin 14 en sections indépendantes (dont le nombre peut s'élever jusqu'à une quinzaine) permet de tenir compte du fait que le jet de gaz d'échappement chauds ne frappe, à un moment donné de l'essai du réacteur, qu'un secteur angulaire particulier de la chemise interne, et, cela, en agissant sur les moyens de réglage de débit d'eau. En pratique, la chaleur qui doit être évacuée "évolue" graduellement lorsque l'on passe du secteur angulaire directement frappé par les gaz chauds au secteur opposé, et les débits d'eau dans chaque section seront réglés en conséquence, par exemple manuellement avant le déroulement de chaque essai. On pourrait également envisager de réaliser un asservissement desdits débits en fonction de l'évolution des conditions de l'essai.

Comme indiqué par les flèches 18a,18b, l'eau, qui a traversé la section de serpentin correspondante, est évacuée vers l'extérieur, en étant éventuellement recyclée.

De plus, comme montré sur la figure 2, il peut être avantageux d'alimenter l'ensemble des tuyauteries d'arrivée d'eau 16 à partir d'une tuyauterie commune 19, périphérique à la chemise externe 11 (l'eau étant évacuée par les tuyauteries correspondantes 18).

Par ailleurs, comme montré sur la figure 4, au voisinage de son extrémité aval 12a par rapport au sens d'écoulement du jet de gaz d'échappement, la chemise interne 12 comporte un second serpentin 20 formant des spires 21 autour de l'axe longitudinal X,X' de la chemise interne 12. Cette partie d'extrémité aval 12a de la chemise interne 12 est rétrécie, ce qui participe au redressement du jet de gaz d'échappement. (On notera que, sur la figure 4, les différentes branches du serpentin 14 n'ont pas été représentées dans un souci de clarté du dessin).

En outre, la partie d'extrémité évasée 11a de la chemise externe 11 peut être adaptée pour y permettre la circulation d'un fluide de refroidissement, comme de l'eau. Comme déjà indiqué, cela est particulièrement intéressant quand, au cours de l'essai, le réacteur 2 fonctionne en inversion de poussée, en fournissant les jets de gaz d'échappement chauds 22. Comme pour la chemise interne 12, la chemise externe 11 peut alors présenter une double enveloppe, ou un ou plusieurs serpentins pour la circulation du fluide de refroidissement, ce qui est symboliquement représenté sur la figure 2, par un double trait pour la partie évasée 11a de la chemise externe 11.

On doit noter également que, du fait de leur refroidissement, les chemises externe 11 et interne 12 peuvent être réalisées en un métal classique, tel que l'acier.

En cours d'essai, lorsque la tuyère 2a du réacteur 2 est inclinée d'un certain angle par rapport à l'axe longitudinal X,X′, la chemise interne 12 permet de redresser et de refroidir le jet de gaz d'échappement 13, avant qu'il n'entre dans le corps 4 du silencieux proprement dit 3. Ce refroidissement est aidé par l'aspiration d'air frais par la cheminée 6 et par effet de trompe entre la partie évasée 11a de la chemise externe 11 et la chemise interne 12 (flèches 23). Le jet de gaz d'échappement 13 redressé et refroidi traverse alors le corps 4 du silencieux 3 et est rejeté à l'atmosphère, après atténuation du bruit d'échappement, par la partie coudée 7 du silencieux 3. La mobilité du silencieux 3 permet en outre d'adapter l'installation 1 d'essais à un type particulier de réacteur (configuration, puissance, etc...).

**Revendications**

1. Dispositif pour capter le jet de gaz d'échappement d'un réacteur (2) d'aéronef à tuyère orientable par rapport à l'axe longitudinal dudit réacteur, lors d'essais au sol de ce dernier, et adapté pour coopérer avec un silencieux (3), présentant un corps de forme générale cylindrique allongé, ledit dispositif comprenant une chemise externe (11) de forme générale cylindrique, évasée au voisinage de son extrémité (11a) destinée à se trouver en regard du réacteur (2) testé, et une chemise interne (12) de forme générale cylindrique, concentrique à ladite chemise externe (11), et étant disposé entre le réacteur (2) et le silencieux (3), caractérisé en ce que ladite chemise interne (12) comporte au moins un premier serpentin (14), pour la circulation d'un fluide de refroidissement dans ladite chemise interne (12), et est destinée à redresser le jet de gaz d'échappement (13) lorsque ce dernier ou la tuyère (2a) du réacteur (2) testé présente une certaine inclinaison (θ) par rapport à l'axe longitudinal (X-X') dudit réacteur.

2. Dispositif selon la revendication 1, caractérisé en ce que ledit premier serpentin (14) s'étend généralement suivant les génératrices du cylindre formé par ladite chemise interne (12).

3. Dispositif selon la revendication 1 ou la revendication 2, caractérisé en ce que, au voisinage de son extrémité aval par rapport au sens d'écoulement du jet de gaz d'échappement, ladite chemise interne (12) comporte au moins un second serpentin (20) formant des spires (21) autour de l'axe longitudinal (X-X') de ladite chemise interne (12).

4. Dispositif selon la revendication 3, caractérisé en ce que la partie d'extrémité aval (12a) de la chemise interne (12) est rétrécie.

5. Dispositif selon l'une quelconque des revendications 1 à 4, caractérisé en ce que ledit premier serpentin (14) est décomposé en une pluralité de sections longitudinales indépendantes (14a,14b,14c,...).

6. Dispositif selon la revendication 5, caractérisé en ce que lesdites sections longitudinales indépendantes (14a,14b,14c,...) sont alimentées à partir d'une source de fluide de refroidissement commune (15).

7. Dispositif selon la revendication 5 ou la revendication 6, caractérisé en ce qu'il comprend des moyens (17b,17c) de réglage du débit de fluide dans chacune desdites sections (14b,14c).

8. Dispositif selon l'une quelconque des revendications 1 à 7, caractérisé en ce que la partie d'extrémité évasée (11a) de ladite chemise externe (11) es adaptée pour y permettre la circulation d'un fluide de refroidissement.

9. Dispositif selon l'une quelconque des revendications 1 à 8, caractérisé en ce que lesdites chemises externe (11) et interne (12) sont réalisées en métal, notamment en acier.

10. Dispositif selon l'une quelconque des revendications 1 à 9,
caractérisé en ce que le fluide de refroidissement est de l'eau.

11. Installation d'essais au sol pour réacteur d'aéronef, comportant un silencieux, présentant un corps de forme générale cylindrique allongé, destiné à être disposé à l'arrière du réacteur testé,
caractérisé en ce que, entre le réacteur (2) et le silencieux (3), est prévu un dispositif (10) selon l'une quelconque des revendications 1 à 10.

12. Installation selon la revendication 11,
caractérisée en ce que le silencieux (3) est mobile par rapport audit dispositif (10).

13. Installation selon la revendication 11 ou la revendication 12, dans laquelle, à son extrémité amont par rapport au sens d'écoulement du jet de gaz d'échappement du réacteur, le silencieux présente une cheminée d'aspiration d'air, caractérisée en ce que, en service, la partie aval (10a) dudit dispositif (10) est disposée sous ladite cheminée (6).

## Claims

1. Device for receiving the jet of exhaust gases from an aircraft jet engine (2) with nozzle capable of orientation with respect to the longitudinal axis of the said jet engine, during ground testing of the latter, and adapted to co-operate with a silencer (3), having a body of elongate cylindrical general shape, the said device comprising an outer jacket (11) of cylindrical general shape, flared in the vicinity of its end (11a) designed to be located facing the jet engine (2) tested, and an inner jacket (12) of cylindrical general shape, concentric with the said outer jacket (11), and being disposed between the jet engine (2) and the silencer (3), characterised in that the said inner jacket (12) comprises at least a first coil of piping (14), for the circulation of a cooling fluid in the said inner jacket (12), and is designed to straighten the jet of exhaust gases (13) when the latter or the nozzle (2a) of the jet engine (2) tested has a certain inclination ($\theta$) with respect to the longitudinal axis (X-X') of the said jet engine.

2. Device according to Claim 1, characterised in that the said first coil of piping (14) extends generally along the generating lines of the cylinder formed by the said inner jacket (12).

3. Device according to Claim 1 or Claim 2, characterised in that, in the vicinity of its end downstream with respect to the direction of flow of the jet of exhaust gases, the said inner jacket (12) comprises at least a second coil of piping (20) forming turns (21) around the longitudinal axis (X-X') of the said inner jacket (12).

4. Device according to Claim 3, characterised in that the downstream end part (12a) of the inner jacket (12) is narrowed.

5. Device according to any one of Claims 1 to 4, characterised in that the said first coil of piping (14) is divided into a plurality of independent longitudinal sections (14a, 14b, 14c, ...).

6. Device according to Claim 5, characterised in that the said independent longitudinal sections (14a, 14b, 14c,...) are fed from a common source of cooling fluid (15).

7. Device according to Claim 5 or Claim 6, characterised in that it comprises means (17b, 17c) for regulating the flow of fluid in each of the said sections (14b, 14c).

8. Device according to any one of Claims 1 to 7, characterised in that the flared end part (11a) of the said outer jacket (11) is adapted to allow the circulation therein of a cooling fluid.

9. Device according to any one of Claims 1 to 8, characterised in that the said outer jacket (11) and inner jacket (12) are constructed of metal, particularly of steel.

10. Device according to any one of Claims 1 to 9, characterised in that the cooling fluid is water.

11. Ground testing installation for an aircraft jet engine, comprising a silencer, having a body of elongate cylindrical general shape, designed to be disposed at the back of the jet engine tested, characterised in that, between the jet engine (2) and the silencer (3), there is provided a device (10) according to any one of Claims 1 to 10.

12. Installation according to Claim 11, characterised in that the silencer (3) is movable with respect to the said device (10).

13. Installation according to Claim 11 or Claim 12, in which, at its end upstream with respect to the direction of flow of the jet of exhaust gases from the jet engine, the silencer has an air suction stack, characterised in that, in service, the downstream part (10a) of the said device (10) is disposed under the said stack (6).

**Patentansprüche**

1. Vorrichtung für die Aufnahme des Abgases eines Strahltriebwerkes (2) eines Düsenluftfahrzeugs mit einer Düse, die gegenüber der Längsachse des Strahltriebwerks während der Bodenprüfung des letzteren verstellbar und dafür ausgestaltet ist, mit einem Schalldämpfer (3) zusammenzuwirken, der einen länglichen zylindrisch geformten Körper aufweist, wobei die Vorrichtung einen zylinderförmigen Außenmantel (11), der im Bereich seines vorderen Endes (11a) konisch erweitert und dafür bestimmt ist, sich gegenüber dem getesteten Strahltriebwerk zu befinden, und einen zylinderförmigen Innenmantel (12), der konzentrisch zum Außenmantel (11) ist, umfaßt und zwischen dem Strahltriebwerk (2) und dem Schalldämpfer (3) angeordnet ist, dadurch gekennzeichnet, daß der Innenmantel (12) wenigstens eine erste Rohrschlange (14) für den Kreislauf einer Kühlflüssigkeit im Innenmantel (12) umfaßt und dazu bestimmt ist, den Abgazstrahl (13) geradeaus zu richten, wenn letzterer oder die Düse (2a) des getesteten Strahltriebwerks (2) eine gewisse Neigung ($\theta$) in Bezug auf die Längsachse (X-X') des Strahltriebwerks aufweist.

2. Vorrichtung nach Anspruch 1, dadurch gekennzeichnet, daß die erste Rohrschlange (14) sich im allgemeinen entlang den Mantellinien des Zylinders erstreckt, der durch den Innenmantel (12) gebildet wird.

3. Vorrichtung nach Anspruch 1 oder 2, dadurch gekennzeichnet, daß der Innenmantel (12) in der Umgebung seines stromabwärtigen Endes in Bezug auf die Strömungsrichtung des Abgasstrahls wenigstens eine zweite Rohrschlange (20) umfaßt, die Windungen (21) um die Längsachse (X-X') des Innenmantels (12) bildet.

4. Vorrichtung nach Anspruch 3, dadurch gekennzeichnet, daß der stromabwärtige Endteil (12a) des Innenmantels (12) verengt ist.

5. Vorrichtung nach einem der Ansprüche 1 bis 4, dadurch gekennzeichnet, daß die erste Rohrschlange (14) in eine Vielzahl von länglichen und unabhängigen Teilstücken (14a, 14b, 14c ...) aufgegliedert ist.

6. Vorrichtung nach Anspruch 5, dadurch gekennzeichnet, daß die unabhängigen länglichen Teilstücke (14a, 14b, 14c, ...) aus einer gemeinsamen Kühlflüssigkeitsversorgung (15) gespeist werden.

7. Vorrichtung nach Anspruch 5 oder 6, dadurch gekennzeichnet, daß sie Mittel (17b, 17c) zur Regelung des Flüssigkeitsdurchsatzes in jedem Teilstück (14b, 14c) umfaßt.

8. Vorrichtung nach einem der Ansprüche 1 bis 7, dadurch gekennzeichnet, daß der konisch erweiterte Endteil (11a) des Außenmantels (11) so ausgebildet ist, daß er den Kühlflüssigkeitskreislauf dort ermöglicht.

9. Vorrichtung nach einem der Ansprüche 1 bis 8, dadurch gekennzeichnet, daß der Außen- (11) und der Innenmantel (12) aus Metall, insbesondere aus Stahl, hergestellt sind.

10. Vorrichtung nach einem der Ansprüche 1 bis 9, dadurch gekennzeichnet, daß die Kühlflüssigkeit Wasser ist.

11. Bodenprüfungsanlage für Strahltriebwerke von Luftfahrzeugen, die einen Schalldämpfer umfaßt, der einen länglich und zylindrisch geformten Körper aufweist, und dazu bestimmt ist, an der Rückseite des getesteten Strahltriebwerks angebracht zu werden, dadurch gekennzeichnet, daß zwischen dem Strahltriebwerk (2) und dem Schalldämpfer (3) eine Vorrichtung (10) nach einem der Ansprüche 1 bis 10 vorgesehen ist.

12. Anlage nach Anspruch 11, dadurch gekennzeichnet, daß der Schalldämpfer (3) in Bezug auf die Vorrichtung (10) beweglich ist.

13. Anlage nach Anspruch 11 oder 12, in der der Schalldämpfer am stromaufwärtigen Ende in Bezug auf die Strömungsrichtung des Abgasstrahles des Strahltriebwerks einen Luftansaugschacht aufweist, dadurch gekennzeichnet, daß der stromabwärtige Teil (10a) der Vorrichtung (10) im Betrieb unter dem Schacht (6) angeordnet ist.

Fig.1

_Fig. 2_

EP 0 346 551 B1

*Fig. 3*

Fig. 4